(19) Europäisches Patentamt
European Patent Office
Office européen des brevets

(11) Veröffentlichungsnummer: **0 003 799**
**B1**

# (12) EUROPÄISCHE PATENTSCHRIFT

(45) Veröffentlichungstag der Patentschrift: **04.11.81**

(51) Int. Cl.³: **C 08 L 25/04,** C 08 K 5/34, C 08 J 9/20

(21) Anmeldenummer: **79100435.1**

(22) Anmeldetag: **14.02.79**

## (54) Feinteilige expandierbare Styrolpolymerisate und Verfahren zu ihrer Herstellung.

(30) Priorität: **23.02.78 DE 2807710**

(43) Veröffentlichungstag der Anmeldung: **05.09.79 Patentblatt 79/18**

(45) Bekanntmachung des Hinweises auf die Patenterteilung: **04.11.81 Patentblatt 81/44**

(84) Benannte Vertragsstaaten: **BE DE FR GB IT NL SE**

(56) Entgegenhaltungen: **Keine Entgegenhaltungen**

(73) Patentinhaber: **HOECHST AKTIENGESELLSCHAFT, Postfach 80 03 20, D-6230 Frankfurt/Main 80 (DE)**

(72) Erfinder: **Mixich, Johann, Dr., In den Bleichwiesen 13, D-6233 Kelkheim (Taunus) (DE)**
Erfinder: **Jastrow, Horst, Dr., Taunusstrasse 72, D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 003 799 B1

Feinteilige expandierbare Styrolpolymerisate und Verfahren zu ihrer Herstellung

Bei der Herstellung von expandierbaren Styrolpolymerisaten, die eine flammhemmende organische Halogenverbindung enthalten, entstehen Produkte, die nach dem Vorschäumen stark einfallen, wodurch gewünschte, niedrige Dichten nicht eingestellt werden können. Ein weiterer Nachteil derartiger Produkte äußert sich im hohen Treibmittelverlust während des Vorschäumvorganges, so daß infolge zu niedriger Treibmittelkonzentration nur schlecht verschweißte Schaumstoffblöcke erhalten werden können. Hinzu kommt noch bei den Fertigteilen die Ausbildung einer sehr ungleichmäßigen narbigen Blockoberfläche, die zum Teil eingefallen und wie geschmolzen aussehende Perlen enthält.

Aus der DE-OS 2 520 635 ist es bekannt, daß durch organische Halogenverbindungen selbstverlöschende expandierbare Styrolpolymerisate sich zu Schaumstoffblöcken mit verbesserter Verschweißung verarbeiten lassen, wenn sie bestimmte Amine enthalten. Auch hierbei werden jedoch noch keine voll befriedigenden Produkte erhalten.

Die Aufgabe bestand nun darin, Verbindungen zu finden, die schon in geringen Konzentrationen das Auftreten der oben erwähnten Mängel, wie Schüttgewichtszunahme schlechte Verschweißung und ungleichmäßige Blockoberfläche verhindern.

Es wurde überraschenderweise gefunden, daß treibmittelhaltige, durch einen Gehalt an organischen Halogenverbindungen selbstverlöschende Styrolpolymerisate nach dem Vorschäumen nur wenig einfallen und sich zu Schaumstoffblöcken mit guter Verschweißung und ausgezeichneter Oberflächenbeschaffenheit verarbeiten lassen, wenn sie in 6-Stellung substituierte 2,4-Diamino-1,3,5-triazine in geringen Konzentrationen enthalten.

Gefunden wurden verschäumbare, ein Treibmittel und eine flammhemmende organische Halogenverbindung enthaltende Teilchen aus einem Styrol-homo- oder -copolymerisat, dadurch gekennzeichnet, daß sie zusätzlich 0,0001 bis 0,1 Gew.-%, vorzugsweise 0,001 bis 0,05 Gew.-%, bezogen auf das Polymerisat, eines 2,4-Diamino-1,3,5-triazin-Derivats der allgemeinen Formel

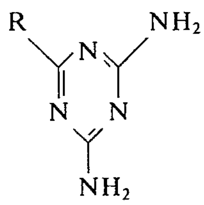

enthalten, worin

R einen Alkylrest mit 1 bis 20 C-Atomen, vorzugsweise 4 bis 15 C-Atomen, bei dem gegebenenfalls in $\omega$-Stellung ein H-Atom durch einen 2,4-Diamino-1,3,5-triazin-6-yl-Rest ersetzt ist, oder einen Cycloalkylrest mit 5 bis 12 C-Atomen oder einen Cycloalkyl-alkyl-Rest oder Alkyl-cycloalkyl-Rest mit 6 bis 13 C-Atomen oder einen Arylrest mit 6 bis 12 C-Atomen oder einen Pyridylrest oder einen Alkaryl- oder Aralkyl-Rest mit 7 bis 13 C-Atomen bedeutet.

Erfindungsgemäß verbessert werden können blähfähige Styrol-Homopolymerisate oder Copolymerisate mit $\alpha$-Methylstyrol, kernhalogenierten Styrolen wie 2,4-Dichlorstyrol, Acrylnitril, Methacrylnitril, Estern von $\alpha,\beta$-ungesättigten Carbonsäuren mit Alkoholen, die 1 bis 8 Kohlenstoffatome enthalten, wie Acrylsäure- oder Methacrylsäureester, sowie Vinylcarbazol. Die Comonomeren sind zu höchstens 50 Gew.-% in den Styrolcopolymerisaten enthalten.

Als Treibmittel enthalten die verschäumbaren Styrolpolymerisate die üblichen gasförmigen oder flüssigen organischen Verbindungen, die das Styrolpolymerisat nicht lösen bzw. lediglich quellen und deren Siedepunkte unterhalb des Erweichungspunktes der Polymerisate liegen.

Solche Verbindungen sind beispielsweise aliphatische Kohlenwasserstoffe wie Propan, Butan, Pentan, Hexan, cycloaliphatische Kohlenwasserstoffe wie Cyclohexan, weiterhin Halogenkohlenwasserstoffe wie Dichlordifluormethan, 1,2,2-Trifluor-1,1,2-trichloräthan. Auch Mischungen dieser Verbindungen können verwendet werden.

Das Treibmittel wird in Mengen von 3 bis 15 Gewichtsprozent, vorzugsweise von 5 bis 8 Gewichtsprozent, bezogen auf das Polymerisat, eingesetzt.

Beispiele von in den erfindungsgemäßen Styrolpolymerisaten als flammhemmende organische Halogenverbindungen zu verwendenden Mitteln sind: Vollständig oder partiell bromierte Oligomere des Butadiens oder des Isoprens, wie des 1-Vinylcyclohex-3-ens, des Cycloocta-1,5-diens, des Cyclododeca-1,5,9-triens oder von Polybutadien mit einem Polymerisationsgrad von z. B. 3 bis 15, bromierte Phosphorsäureester, z. B. Tris-(2,3-dibrompropyl)phosphat, kernbromierte Phenylalkyläther und Phenylalkenyläther, z. B. Pentabromphenylallyläther, Pentabrommonochlorcyclohexan und andere, mindestens 3 Bromatome enthaltende Cyclohexane.

Die organischen Halogenverbindungen können in Mengen von 0,4 bis 3 Gew.-% im expandierbaren Styrol-Polymerisat enthalten sein.

Zusätzlich zu den Halogenverbindungen können die bekannten Synergisten in üblichen Mengen eingesetzt werden, vorzugsweise organische Peroxide, insbesondere solche mit einer Halbwertszeit von mindestens zwei Stunden bei 373 K.

Beispiele für erfindungsgemäß einzusetzende 2,4-Diamino-1,3,5-triazin-Derivate sind:

6-Methyl-2,4-diamino-1,3,5-triazin (Acetoguanamin)
6-Äthyl-2,4-diamino-1,3,5-triazin (Propioguanamin)
6-Propyl-2,4-diamino-1,3,5-triazin (Butyroguanamin)
6-Isopropyl-2,4-diamino-1,3,5-triazin (Isobutyroguanamin)
6-Nonyl-2,4-diamino-1,3,5-triazin (Caprinoguanamin)
6-Heptadecyl-2,4-diamino-1,3,5-triazin (Palmitinoguanamin)
6-Cyclopentyl-2,4-diamino-1,3,5-triazin
6-Cyclohexyl-2,4-diamino-1,3,5-triazin
6-Cyclohexylmethyl-2,4-diamino-1,3,5-triazin
6-Methylcyclohexyl-2,4-diamino-1,3,5-triazin
6-Phenyl-2,4-diamino-1,3,5-triazin (Benzoguanamin)
6-(3-Pyridyl-)-2,4-diamino-1,3,5-triazin
6-Benzyl-2,4-diamino-1,3,5-triazin (Phenylacetoguanamin)
6-Toluyl-2,4-diamino-1,3,5-triazin
6-Xylyl-2,4-diamino-1,3,5-triazin

Als Beispiel für ein 6-Alkyl-2,4-diamino-1,3,5-triazin, bei dem in ω-Stellung ein H-Atom der Alkylgruppe durch einen 2,4-Diamino-1,3,5-triazin-6-yl-Rest ersetzt ist, sei Succinoguanamin genannt

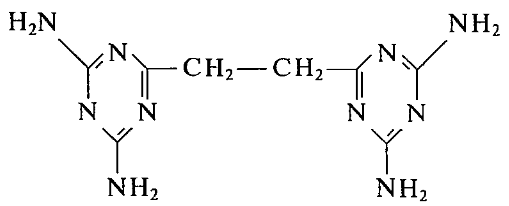

Es können auch Gemische von 2 oder mehreren der erfindungsgemäß einzusetzenden Diamino-triazin-Derivate verwendet werden.

Die erfindungsgemäßen expandierbaren Styrolpolymerisate werden durch Polymerisation, und zwar zweckmäßig nach dem an sich bekannten Suspensions- oder Perlpolymerisationsverfahren bei Temperaturen von etwa 353 bis etwa 403 K erhalten. Die Polymerisation wird in üblicher Weise mittels einer oder mehrerer radikalbildender Substanzen initiiert, wobei vorzugsweise organische Peroxide oder Gemische derselben als Initiatoren eingesetzt werden, beispielsweise t-Butylperbenzoat, t-Butylperoctoat, Dibenzoylperoxid, t-Butylperacetat. Wahlweise können auch die bekannten Azoverbindungen wie Azobisisobutyronitril, verwendet werden.

Die Wahl der Initiatoren richtet sich nach der Polymerisationstemperatur. Führt man die Polymerisation bei mehreren Temperaturstufen durch, so ist es vorteilhaft, Mischungen von Initiatoren mit unterschiedlichen Halbwertszeiten zu verwenden.

Zur Stabilisierung der Suspension können die üblichen anorganischen Suspendierhilfsmittel, wie Tricalciumphosphat, Bariumsulfat, Zinkoxid u. a., oder organische Schutzkolloide, wie Poly-N-methyl-N-vinylacetamid, Polyvinylalkohol, Methylcellulose u. a., verwendet werden. Die Menge und der Zugabezeitpunkt des Suspensionsstabilisators richten sich nach der einzustellenden Teilchengröße der Styrolpolymerisate.

Die Zugabe des erfindungsgemäß einzusetzenden Diaminotriazin-Derivats kann vor oder während der Polymerisation erfolgen.

Außer den genannten Verbindungen und Substanzen können die erfindungsgemäßen verschäumbaren Styrolpolymerisat-Teilchen noch Weichmacher, UV- und Wärmestabilisatoren für Kunststoffe, Farbstoffe und äußerlich aufgebrachte Ausrüstungsmittel, z. B. solche, die das Verklumpen beim Vorschäumen verhindern, in üblichen Mengen enthalten.

Die erfindungsgemäßen Styrolpolymerisat-Teilchen werden getrocknet und gegebenenfalls gesiebt. Sie können dann in der üblichen Weise vorgeschäumt und, nach Zwischenlagerung, in Formen zu Schaumstoffkörpern fertigverschäumt werden.

Die mittels der erfindungsgemäßen Styrolpolymerisat-Teilchen hergestellten Schaumstoffkörper zeichnen sich durch gute Verschweißung und ausgezeichnete Oberflächenbeschaffenheit aus.

Beispiel 1 (Vergleichsversuch)

In einem mit Stickstoff gespülten druckfesten Rührkessel aus korrosionsfestem Stahl wurde folgende Mischung eingefüllt:

| | |
|---|---|
| 73 kg | entmineralisiertes Wasser |
| 75,5 kg | Styrol |
| 450 g | 1,2,5,6,9,10-Hexabromcyclododecan |
| 75 g | Dicumylperoxid |
| 120 g | Dibenzoylperoxid |
| 187,5 g | t-Butylperbenzoat |

Nach Schließen des Kessels wurde unter Rühren 6,5 Stunden bei 363 K und 3 Stunden bei 393 K polymerisiert. 1,275 g Kaliumperoxodisulfat in 100 ml Wasser und 298 g Tricalciumphosphat in 3 l Wasser wurden bei einem Styrolumsatz von ca. 40—47% zugegeben. Nach 4 Stunden bei 363 K wurden 5,9 kg eines Treibmittelgemisches aus 75 Gewichtsprozent n-Pentan und 25 Gewichtsprozent iso-Pentan innerhalb von 15 bis 20 Minuten in den Kessel gedrückt.

Nach Beendigung der Polymerisation wurde auf Raumtemperatur abgekühlt. Das Polymerisat wurde separiert, getrocknet und gesiebt.

Die Fraktion mit Korngrößen zwischen 0,8 und 1,6 mm wurde in einem handelsüblichen Vorschäumer mit Wasserdampf diskontinuierlich so vorgeschäumt, daß nach pneumatischer Förderung und 24 Stunden Zwischenlagerung ein Schüttgewicht von 15 g/l resultierte. Anschließend (nach 24stündiger Zwischenlagerung) wurde in einer 48-l-Form mittels Wasserdampf bei einem Druck von 1,8 bar zu Schaumstoffblöcken ausgeschäumt. Die Prüfwerte sind in Tabelle 1 zusammengestellt.

Beispiel 2 (Vergleichsversuch)

Die Polymerisation wurde wie in Beispiel 1 durchgeführt, jedoch wurden dem Polymerisationsansatz zu Beginn 3,75 g N,N-Dimethyl-N-dodecylamin zugesetzt. Aufarbeitung des Polymerisates, wie Separierung, Trocknen, Sieben, Vorschäumen und Blockherstellung erfolgten ebenfalls wie unter Beispiel 1 angegeben. Die Ergebnisse des Versuches sind in Tabelle 1 wiedergegeben.

Beispiel 3

In diesem Versuch wurde die gleiche Mischung unter gleichen Bedingungen wie bei Beispiel 1 beschrieben polymerisiert, jedoch wurden dem Polymerisationsansatz zu Beginn 3,75 g (0,005 Gew.-%, bezogen auf Styrol) 6-Nonyl-2,4-diamino-1,3,5-triazin zugesetzt. Alle weiteren Schritte der Aufarbeitung erfolgten wie in Beispiel 1. Eine Zusammenstellung der Prüfwerte zeigt Tabelle 1.

Beispiel 4

Unter Vergrößerung der Menge des 6-Nonyl-2,4-diamino-1,3,5-triazins auf 18,75 g (0,025 Gew.-%, bezogen auf Styrol) wurde die Mischung aus Beispiel 3 polymerisiert. Nach analoger Aufarbeitung wurden Ergebnisse erhalten, wie sie in Tabelle 1 angegeben sind.

Beispiel 5

Die Polymerisation wurde wie in Beispiel 1 durchgeführt, nur mit dem Unterschied, daß dem Ansatz zu Beginn der Polymerisation 3,75 g (0,005 Gew.-%, bezogen auf Styrol) 6-Phenyl-2,4-diamino-1,3,5-triazin zugefügt wurden. Die Aufarbeitung der Polymerisationsperlen und die Blockherstellung entsprachen dem in Beispiel 1 angegebenen Verfahren. Die Versuchsergebnisse können Tabelle 1 entnommen werden.

Tabelle 1

| Beispiel | Schüttgewichts-zunahme[1]) (g/l) | Stempelweg[2]) (mm) | Blockoberfläche |
|---|---|---|---|
| 1 (Vergl.vers.) | 2,5 | 23 | schlecht[3]) |
| 2 (Vergl.vers.) | 1,5 | 29 | gut |
| 3 | 1,4 | 36 | gut |
| 4 | 0,8 | 40 | gut |
| 5 | 1,2 | 35 | gut |

[1]) Schüttgewichtszunahme der vorgeschäumten Perlen nach pneumatischer Förderung in ein Silo und 24 Stunden Zwischenlagerung.

[2]) Ermittelt durch einen Stauch-Knick-Versuch (Beschreibung siehe unten). Der Stempelweg ist ein Maß für die Güte der Verschweißung im Schaumstoff.

[3]) Ungleichmäßig narbige Oberfläche mit zum Teil eingefallenen und wie geschmolzen aussehenden Perlen.

Stauch-Knick-Versuch

Herstellung der Prüfplatten

Aus einem Schaumstoffblock mit den Abmessungen

$$(l = 600\ mm) \times (b = 400\ mm) \times (h = 200\ mm)$$

werden 6 Platten wie folgt ausgesägt (vgl. die Figur):

Quer zur Längsrichtung wird der Block in 3 Stücke mit den Längen $l_1 = 100$ mm, $l_2 = 200$ mm, $l_3 = 300$ mm zersägt. Das Stück mit der Länge $l_2 = 200$ mm wird in Richtung der Breitseite an beiden Enden um jeweils 10 mm gekürzt und dann quer zur Richtung der Höhe jeweils in 3 obere (1, 2, 3) und untere (4, 5, 6) Platten mit einer Höhe (Dicke) von 30 mm zersägt. Die Prüfplatten haben folgende Abmessungen: 200 mm × 380 mm × 30 mm.

Bei der Blockherstellung liegen die obere und untere Blockoberfläche (l × b) an den Wänden der Verschäumungsform an, durch die der Dampf in das Forminnere eintritt. Durch die restlichen 4 Formwände wird das Forminnere entlüftet. Durchführung der Messung:

Die Platten werden in ihrer Längsrichtung (380 mm) zwischen dem stehenden und dem mit 100 mm je Minute bewegten Stempel einer Zug-Druck-Prüfmaschine gestaucht, wobei gleichzeitig die Prüfplatten senkrecht zur Stauchrichtung ausknicken. Die vorgeschriebene Knickrichtung wird durch die in der Figur in den Platten 1 bis 6 eingezeichneten Pfeile angezeigt. Gemessen wird der Stempelweg in mm bis zum Bruch der Platte.

Einem größeren Stempelweg wird eine höhere Verschweißung zugeordnet.

**Patentansprüche**

1. Verschäumbare, ein Treibmittel und eine flammhemmende organische Halogenverbindung enthaltende Teilchen aus einem Styrol-homo- oder -copolymerisat, dadurch gekennzeichnet, daß sie zusätzlich 0,0001 bis 0,1 Gew.-%, vorzugsweise 0,001 bis 0,05 Gew.-%, bezogen auf das Polymerisat, eines 2,4-Diamino-1,3,5-triazin-Derivats der allgemeinen Formel

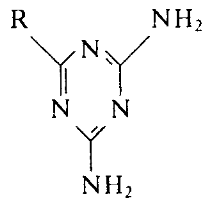

enthalten, worin
R einen Alkylrest mit 1 bis 20 C-Atomen, vorzugsweise 4 bis 115 C-Atomen, bei dem ggf. in ω-Stellung ein H-Atom durch einen 2,4-Diamino-1,3,5-triazin-6-yl-Rest ersetzt ist, oder einen Cycloalkylrest mit 5 bis 12 C-Atomen, oder einen Cycloalkyl-alkyl-Rest oder Alkyl-cycloalkyl-Rest mit 6 bis 13 C-Atomen, oder einen Arylrest mit 6 bis 12 C-Atomen oder einen Pyridylrest oder einen Alkaryl- oder Aralkyl-Rest mit 7 bis 13 C-Atomen bedeutet.

2. Verfahren zur Herstellung von verschäumbaren Polymerisatteilchen durch Homopolymerisation oder Copolymerisation von Styrol in wäßriger Suspension in Gegenwart von 3 bis 15 Gewichtsprozent, bezogen auf das Polymerisat, eines Treibmittels und einer flammhemmenden organischen Halogenverbindung, dadurch gekennzeichnet, daß man dem Polymerisationsansatz 0,0001 bis 0,1 Gew.-%, vorzugsweise 0,001 bis 0,05 Gew.-%, bezogen auf die Menge des monomeren Styrols bzw. auf die Gesamtmenge aus monomerem Styrol und Comonomer, eines 2,4-Diamino-1,3,5-triazin-Derivats der allgemeinen Formel

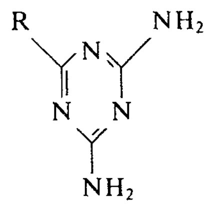

zusetzt, worin
R einen Alkylrest mit 1 bis 20 C-Atomen, vorzugsweise 4 bis 15 C-Atomen, bei dem gegebenenfalls in ω-Stellung ein H-Atom durch einen 2,4-Diamino-1,3,5-triazin-6-yl-Rest ersetzt ist, oder einen Cycloalkylrest mit 5 bis 12 C-Atomen, oder einen Cycloalkyl-alkyl-Rest oder Alkyl-cycloalkyl-Rest mit 6 bis 13 C-Atomen, oder einen Arylrest mit 6 bis 12 C-Atomen oder einen Pyridylrest oder einen Alkaryl- oder Aralkyl-Rest mit 7 bis 13 C-Atomen bedeutet.

## Claims

1. Foamable particles of a styrene homo- or copolymer containing an expanding agent and a flameproofing organic halogen compound, which comprise in addition from 0.0001 to 0.1, preferably 0.001 to 0.05% by weight, relative to the polymer, of a 2,4-diamino-1,3,5-triazine derivate of the formula

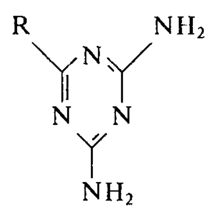

in which
R is an alkyl radical having from 1 to 20, preferably 4 to 15, carbon atoms, where optionally a H atom in ω-position is substituted by a 2,4-diamino-1,3,5-triazine-6-yl radical; or a cycloalkyl radical having from 5 to 12 carbon atoms, or a cycloalkyl-alkyl or alkyl-cycloalkyl radical having from 6 to 13 carbon atoms, or an aryl radical having from 6 to 12 carbon atoms or a pyridyl radical; or an alkylaryl or aralkyl radical having from 7 to 13 carbon atoms.

2. Process for the preparation of foamable polymer particles by homo-polymerization or copolymerization of styrene in aqueous suspension in the presence of 3 to 15% by weight, relative to the polymer, of an expanding agent and a flameproofing organic halogen compound, which comprises adding to the polymer batch from 0.0001 to 0.1, preferably 0.001 to 0.05 weight %, relative to the amount of styrene monomer or the total amount of styrene monomer and comonomer, of a 2,4-diamino-1,3,5-triazine derivative of the formula

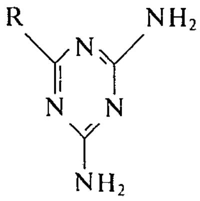

in which
R is an alkyl radical having from 1 to 20, preferably 4 to 15 carbon atoms, where optionally a H atom in ω-position is substituted by a 2,4-diamino-1,3,5-triazine-6-yl radical; or a cycloalkyl radical having from 5 to 12 carbon atoms, or a cycloalkyl-alkyl or alkyl-cycloalkyl radical having from 6 to 13 carbon atoms, or an aryl radical having form 6 to 12 carbon atoms or a pyridyl radical; or an alkylaryl or aralkyl radical having from 7 to 13 carbon atoms.

**Revendications**

1. Particules expansibles en un homopolymère ou copolymère du styrène qui renferment un porogène et un composé organique halogéné ignifugeant, particules caractérisées en ce qu'elles contiennent en outre de de 0,0001 à 0,1% en poids, de préférence de 0,001 à 0,05% en poids, par rapport au polymère, d'une diamino-2,4-triazine-1,3,5 répondant à la formule générale:

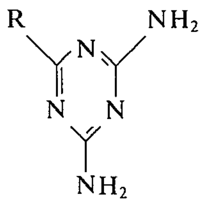

dans laquelle R représente un radical alkyle contenant de 1 à 20 atomes de carbone, de préférence de 4 à 15, dans lequel un atome d'hydrogène en position ω peut être remplacé par un radical diamino-2,4 triazine-1,3,5 yle-6, ou un radical cyclo-alkyle contenant de 5 à 12 atomes de carbone, ou un radical cyclo-alkyl-alkyle ou alkyl-cyclo-alkyle contenant de 6 à 13 atomes de carbone, ou un radical aryle contenant de 6 à 12 atomes de carbone, ou un radical pyridyle, ou un radical alkylaryle ou aralkyle contenant de 7 à 13 atomes de carbone.

2. Procédé de préparation de particules de polymère expansibles par homopolymérisation ou copolymérisation du styrène en suspension aqueuse, en présence de 3 à 15% en poids, par rapport au polymère, d'un porogène et d'un composé organique halogéné ignifugeant, procédé caractérisé en ce qu'on ajoute au mélange de polymérisation de 0,0001 à 0,1% en poids, de préférence de 0,001 à 0,05% en poids, par rapport à la quantité du styrène monomère ou à la quantité totale du styrène monomère et du comonomère, d'une diamino-2,4 triazine-1,3,5 répondant à la formule générale:

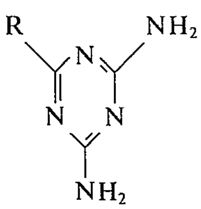

dans laquelle R représente un radical alkyle contenant de 1 à 20 atomes de carbone, de préférence de 4 à 15, dont l'atome H en position ω est éventuellement remplacé par un radical diamino-2,4 triazine-1,3,5 yle-6, ou un radical cyclo-alkyle contenant de 5 à 12 atomes de carbone, ou un radical cyclo-alkyl-alkyle ou alkyl-cyclo-alkyle contenant de 6 à 13 atomes de carbone, ou un radical aryle contenant de 6 à 12 atomes de carbone, ou un radical pyridyle, ou un radical alkyl-aryle ou aralkyle contenant de 7 à 13 atomes de carbone.

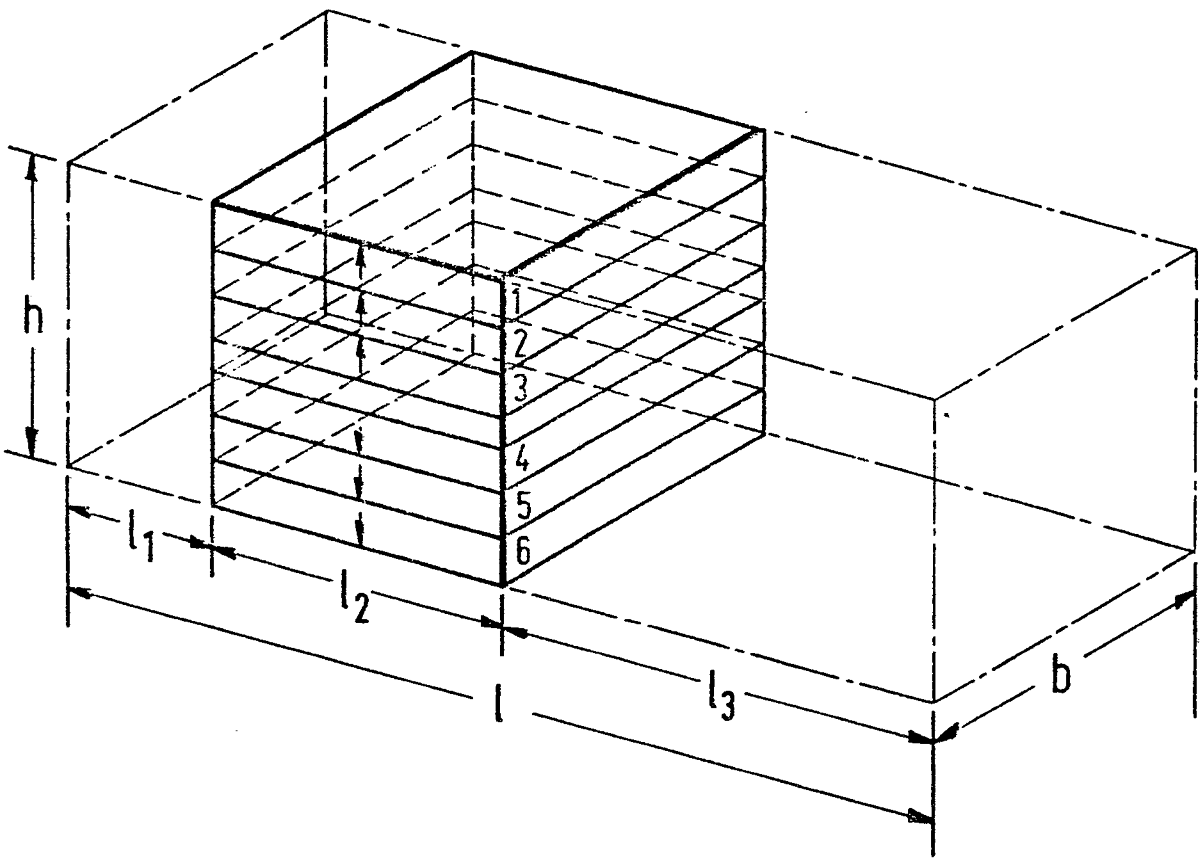
h
1
2
3
4
5
6
l1
l2
l3
l
b